# EUROPÄISCHE PATENTSCHRIFT

(11) **EP 2 087 363 B1**
(45) Veröffentlichungstag und Bekanntmachung des Hinweises auf die Patenterteilung: **11.10.2017**
(21) Anmeldenummer: 07821218.0
(22) Anmeldetag: 11.10.2007
(51) Int. Cl.: G01N 35/10

(54) **VERFAHREN ZUM FESTSTELLEN EINER VERSTOPFUNG, EINES KOAGELS ODER EINES PFROPFENS AN DER AUFNAHMEÖFFNUNG EINER DOSIERNADEL**
METHOD FOR IDENTIFYING A BLOCKAGE, A COAGULUM OR A CLOT ON THE RECEIVING OPENING OF A DOSING NEEDLE
PROCÉDÉ POUR CONSTATER UN ENGORGEMENT, UN COAGEL OU UN BOUCHON À L'OUVERTURE RÉCEPTRICE D'UNE AIGUILLE DE DOSAGE

(30) Priorität: 09.11.2006 DE 102006052833
(43) Veröffentlichungstag der Anmeldung: 12.08.2009
(73) Patentinhaber: DiaSys Diagnostic Systems GmbH, 65558 Holzheim (DE)
(72) Erfinder: GORKA, Günther, 65520 Bad Camberg (DE)
(74) Vertreter: WSL Patentanwälte Partnerschaft mbB
(86) Internationale Anmeldenummer: PCT/EP2007/060851
(87) Internationale Veröffentlichungsnummer: WO 2008/055757

(56) Entgegenhaltungen:
- EP-A- 0 913 671
- AU-A1- 2005 211 572
- US-A- 5 648 727
- US-A1- 2002 009 393
- US-A1- 2005 092 080

## Beschreibung

Die Erfindung betrifft ein Verfahren zum Feststellen einer Verstopfung, eines Koagels oder eines Pfropfens an der Aufnahmeöffnung einer Pipettiernadel in einem Analysegerät bei der Entnahme von Flüssigkeit aus einem Flüssigkeit enthaltenden Gefäß und/oder bei der Abgabe von Flüssigkeiten in ein Gefäß sowie ein Analysegerät mit einer Einrichtung zum Feststellen einer Verstopfung, eines Koagels oder eines Pfropfens.

In Analysegeräten, die insbesondere für klinische oder chemische Analysen eingesetzt werden, werden häufig Flüssigkeiten pipettiert, deren Bestandteile zur Verklumpung oder Koagulierung neigen können, wie beispielsweise Blut, Serum o.ä. Das Pipettieren und Dosieren dieser Flüssigkeiten erfolgt über eine Pipettiervorrichtung mit wenigstens einer Pipettiernadel, die hohl ist und eine Spitze aufweist, in deren Nähe sich eine Abgabeöffnung befindet. Die Pipettiernadel wird in ein Proben- oder Meßgefäß eingefahren, und mit Hilfe einer angeschlossenen Pumpe kann sie Flüssigkeiten ansaugen oder abgeben. Insbesondere beim Pipettieren von Flüssigkeiten, die Koagel oder Klümpchen bilden können, besteht die Gefahr, daß die Pipettiernadel verstopft. Dies kann u.a. dazu führen, daß die aufgesaugte oder abgegebene Flüssigkeitsmenge ungenau wird und daß das Analyseergebnis verfälscht wird. Die Koagel, Klumpen oder Pfropfen können z.B. bei spektrometrischen Meßverfahren die Ergebnisse beeinflußen.

Gängige Analysegeräte verfügen daher über ein System, mit dessen Hilfe Verstopfungen der Pipettiernadel festgestellt werden können. Dieses System mißt bei der Abgabe bzw. Aufnahme von Flüssigkeit einen Über- bzw. Unterdruck und zeigt eine Verstopfung an, wenn der Über- oder Unterdruck einen Schwellenwert übersteigt. Dieses Verfahren ist für die Dosierung von großen Volumina geeignet, da hierbei große Druckunterschiede im Falle einer Verstopfung auftreten. Für sehr kleine Volumina ist dieses System nicht anwendbar, da die Druckunterschiede im Falle einer Verstopfung aufgrund der geringen Volumina so gering sind, daß sie nur sehr schwer oder gar nicht feststellbar sind. Ein weiteres Problem der Messung eines Druckanstiegs oder -abfalls besteht darin, daß Schwankungen des Umgebungsluftdrucks das Ergebnis beeinflussen können. Im Übrigen werden für dieses Verfahren zusätzliche Drucksensoren benötigt, wodurch die entsprechenden Analysegeräte teurer werden.

Die AU 2005211572 betrifft ein System zur Flüssigkeitsabgabe und Überwachung des Flüssigkeitsspiegels. Ein Sensor umfasst eine erste Elektrode, die sich entlang eines Flüssigkeitsweges einer Sonde oberhalb der Spitze befindet, und eine zweite Elektrode, die in Längsrichtung beabstandet und von der ersten Elektrode elektrisch isoliert ist und sich an der Spitze der Sonde befindet. Es wird ein Signal mit Hilfe der ersten Elektrode gesandt und zumindest ein Teil des Signals von der zweiten Elektrode empfangen. Durch Änderungen des empfangenen Signals können ein Kontakt mit einer Flüssigkeitsoberfläche und ein Flüssigkeitsfluss festgestellt werden.

Die US 2005/0092080 betrifft ein Verfahren und eine Vorrichtung zum Ausschließen elektrischer Interferenz bei einem kapazitätsbasierten Sensorsystem zur Bestimmung eines Flüssigkeitsspiegels. Es erfolgt eine Messung der Kapazität während der Bewegung einer Sonde in eine Flüssigkeit hinein oder aus einer Flüssigkeit heraus. Die Bewegung der Sonde wird in Abhängigkeit der Ausmaßes der Kapazitätsänderung gestoppt und während die Sonde ruht, wird weiter die Kapazität gemessen. Basierend auf den weiteren Messungen wird entweder die Bewegung der Sonde fortgesetzt, die Position der Sonde bestimmt, Flüssigkeit in die Sonde aufgenommen oder Flüssigkeit aus der Sonde abgegeben. Die Fortsetzung der Bewegung der Sonde kann beinhalten, dass die Kapazität wiederholt gemessen wird.

Demgegenüber besteht die Aufgabe der vorliegenden Erfindung darin, ein preisgünstiges und zuverlässiges Verfahren zur Feststellung einer Verstopfung, eines Koagels oder eines Pfropfens in einer Pipettiernadel bei der Entnahme oder Abgabe von Flüssigkeiten zur Verfügung zu stellen sowie ein Analysegerät, mit welchem dieses Verfahren durchgeführt wird. Insbesondere sollen das erfindungsgemäße Verfahren sowie das Analysegerät in der Lage sein, Verstopfungen, Koagel oder Pfropfen bei der Dosierung von kleinen Mengen an Flüssigkeiten festzustellen.

Erfindungsgemäß wird diese Aufgabe gelöst durch ein Verfahren zum Feststellen einer Verstopfung an der Aufnahmeöffnung einer Pipettiernadel, die an oder in der Nähe der Aufnahmeöffnung eine Elektrode (E1) aufweist oder selbst als Elektrode (E1) ausgebildet ist, in einem Analysegerät bei der Entnahme von Flüssigkeit aus einem Flüssigkeit enthaltenden Gefäß und/oder bei der Abgabe von Flüssigkeit in ein Flüssigkeit enthaltendes Gefäß, bei dem
- die Pipettiernadel verfahren wird, so daß die Aufnahmeöffnung in die Flüssigkeit in dem Flüssigkeit enthaltenden Gefäß eintaucht,
- eine Flüssigkeitsmenge in die Pipettiernadel aufgesaugt oder aus der Pipettiernadel abgegeben wird,
- die Pipettiernadel weiter verfahren wird, so daß die Aufnahmeöffnung aus der Flüssigkeit in dem Flüssigkeit enthaltenden Gefäß herausfährt,
- während des Verfahrens der Pipettiernadel die Kapazitäten (K_{Messung}) zwischen der Elektrode (E1) und einer Gegenelektrode (E2) in Abhängigkeit von der Position der Pipettiernadel erfaßt werden,
- die erfaßten Kapazitäten (K_{Messung}) mit vorgegebenen Sollwerten (K_{Soll}) für die jeweilige Position der Pipettiernadel verglichen werden und
- eine Information über das Vorliegen einer Verstopfung an der Aufnahmeöffnung der Pipettiernadel ausgegeben wird, wenn die Abweichung zwischen den erfaßten Kapazitäten (K_{Messung}) und den vorgegebenen Sollwerten (K_{Soll}) an einer Position oder mehreren Positionen der Pipettiernadel einen vorgegebenen Schwellenwert übersteigt,
wobei die Sollwerte (K_{Soll}) der Kapazität in Abhängigkeit von der Position der Pipettiernadel bestimmt werden, indem
- die Pipettiernadel verfahren wird, so daß die Aufnahmeöffnung in die Flüssigkeit in dem Flüssigkeit enthaltenden Gefäß eintaucht,
- die Pipettiernadel weiter verfahren wird, so daß die Aufnahmeöffnung aus der Flüssigkeit in dem Flüssigkeit enthaltenden Gefäß herausfährt, ohne daß eine Flüssigkeitsmenge in die Pipettiernadel aufgesaugt wird,
- während des Verfahrens der Pipettiernadel die Kapazitäten (K₀) zwischen der Elektrode (E1) und einer Gegenelektrode (E2) in Abhängigkeit von der Position der Pipettiernadel erfaßt werden,
- die erfaßten Kapazitäten (K₀) in Abhängigkeit von der Position der Pipettiernadel bezüglich der sich in Abhängigkeit von dem bei der Flüssigkeitsentnahme zu entnehmenden Flüssigkeitsvolumen und den Gefäßabmessungen ergebenden Änderung der Höhe der Flüssigkeitsoberfläche in dem Gefäß unter Erhalt der Sollwerte (K_{Soll}) korrigiert werden.

Wenn in dieser Beschreibung oder den Ansprüchen von einer Verstopfung der Pipettiernadel die Rede ist, so umfaßt dieser Begriff jede Art von Verstopfung, u. a. auch Koagel oder Pfropfen, die durch das Ansaugen von Teilchen in der Flüssigkeit, das Ansaugen von koagulierten Blutbestandteilen oder durch Ausscheidungen, Ausfällungen oder Verfestigung von Bestandteilen aus der Flüssigkeit an der Aufnahmeöffnung der Pipettiernadel oder innerhalb der Pipettiernadel entstehen können.

Dieses Verfahren ist besonders geeignet zum Pipettieren und Dosieren von Flüssigkeiten, die koagulieren oder Klumpen bilden können, wie beispielsweise Blut, Serum, Zellsuspensionen, proteinhaltige Lösungen, DNA-haltige Lösungen, Gele und Aufschlämmungen.

Die zur Ausführung des Verfahrens verwendete Pipettiernadel weist an oder in der Nähe der Aufnahmeöffnung eine elektrisch leitfähige Elektrode auf oder ist selbst als Elektrode ausgebildet. Die Elektrode ist zweckmäßigerweise gegenüber der Umgebung isoliert.

Die Gegenelektrode zur Messung der Kapazität kann in verschiedener Weise ausgebildet und angeordnet sein. In einer Ausführungsform der Erfindung ist die Gegenelektrode unter oder neben dem die Flüssigkeit enthaltenden Gefäß angeordnet. Vorzugsweise ist sie unter dem Gefäß angeordnet. In einer alternativen Ausführungsform bildet die Gefäßwand oder ein Teil davon die Gegenelektrode. In diesem Fall ist die Gefäßwand oder ein Teil davon elektrisch leitfähig ausgebildet. In einer weiteren alternativen Ausführungsform ist die Gegenelektrode in der Dosiernadel selbst ausgebildet, indem beispielsweise die Elektrode an der Dosiernadel und die Gegenelektrode als zwei koaxial angeordnete Röhren oder als eine Röhre und ein darin koaxial angeordneter Stift ausgebildet sind.

Die Kapazität ist die Eigenschaft eines Bauteils eine elektrische Energie zu speichern. Der Kondensator ist das elektronische Bauelement, das diese ausgeprägte Eigenschaft besitzt. Die Kapazität eines Kondensators wird durch seine baulichen Größen bestimmt. Sie ist umso größer, je größer die Platten- bzw. Elektrodenoberfläche, je kleiner der Platten- bzw. Elektroden abstand und je größer die Dielektrizitätskonstante des zwischen den Platten- bzw. Elektroden befindlichen Dielektrikums sind. Die Dielektrizitätskonstante gibt an, um wieviel das Dielektrikum besser ist als Luft

Beim Eintritt der Pipettiernadel bzw. der Elektrode in wäßrige, Ionen enthaltende Flüssigkeit findet eine fast sprunghafte Kapazitätssteigerung statt. In diesem Bereich weist der Verlauf der Kapazität in Abhängigkeit von der Position der Pipettiernadel die größte Änderung auf. Die Ableitung der Kapazität nach der Position besitzt an dieser Stelle ein Maximum. In umgekehrter Verfahrrichtung der Pipettiernadel, d. h. wenn die Spitze der Pipettiernadel aus der Flüssigkeit herausgefahren wird, tritt wiederum ein sprunghafter Kapazitätsabfall auf.

Wenn sich an der Aufnahmeöffnung der Pipettiernadel eine Verstopfung, ein Koagel oder ein Pfropfen befindet, insbesondere ein von der Aufnahmeöffnung der Pipettiernadel herabhängendes Koagel, kann dadurch zwischen der Flüssigkeit und der Aufnahmeöffnung der Pipettiernadel eine Verbindung oder Überbrückung entstehen, auch wenn die Pipettiernadel bereits aus der Flüssigkeit herausgefahren wurde. Diese Verbindung oder Überbrückung zwischen der Flüssigkeitsoberfläche und der Aufnahmeöffnung der Pipettiernadel ist elektrisch leitend. Aufgrund dessen wird über einen bestimmten Verfahrweg der Pipettiernadel eine höhere Kapazität erfaßt als man ohne diese durch die Verstopfung verursachte Verbindung und unter Berücksichtigung des Flüssigkeitsspiegels in dem Gefäß erwarten würde. Diese erwartete Kapazität wird hierin als der Sollwert (K_{Soll}) bezeichnet und läßt sich anhand der in Abhängigkeit von dem bei der Flüssigkeitsentnahme zu entnehmenden Flüssigkeitsvolumen und den Gefäßabmessungen ergebenden Änderung der Höhe der Flüssigkeitsoberfläche in dem Gefäß leicht berechnen. Übersteigt die Abweichung zwischen den erfaßten Kapazitäten und den vorgegebenen Sollwerten an einer Position oder mehreren Positionen der Pipettiernadel einen vorgegebenen Schwellenwert, so wird dies als Vorhandensein einer Verstopfung, eines Koagels oder eines Pfropfens gewertet und eine entsprechende Information ausgegeben.

In einer bevorzugten Ausführungsform der Erfindung werden die Kapazitäten (K_{Messung}) auf Teilabschnitten des Verfahrweges der Pipettiernadel erfaßt, wobei die Teilabschnitte wenigstens die Wegstrecke der Aufnahmeöffnung der Pipettiernadel beim Herausfahren der Aufnahmeöffnung aus der Flüssigkeit in den Raum außerhalb der Flüssigkeit umfassen.

Damit beinhaltet die Messung der Kapazitäten die Teilabschnitte des Verfahrwegs der Pipettiernadel, bei denen die größte Kapazitätsänderung stattfindet und welche zur Erfassung einer Verstopfung besonders relevant sind. Durch Erfassen der Änderung der Kapazitäten während des Einfahrens der Pipettiernadel in die Flüssigkeit in dem Flüssigkeit enthaltenden Gefäß kann festgestellt werden, ob das Flüssigkeit enthaltende Gefäß tatsächlich die Menge an theoretisch enthaltener Flüssigkeit enthält. Durch die Messung während des Herausfahrens aus der Flüssigkeit kann festgestellt werden, ob nach dem Entnahme- oder Abgabevorgang durch die Pipettiernadel die theoretisch in dem Gefäß enthaltene Flüssigkeit vorhanden ist und ob sich an der Aufnahmeöffnung der Pipettiernadel eine Verstopfung befindet.

In einer weiteren bevorzugten Ausführungsform der Erfindung werden die Kapazitäten (K_{Messung}) über den gesamten Verfahrweg der Pipettiernadel erfaßt.

Eine ununterbrochene Messung des Kapazitätsänderungsverlaufs erlaubt es, die Flüssigkeitsabgabe und insbesondere Flüssigkeitsaufnahme genau zu überwachen, wobei insbesondere bei der Flüssigkeitsaufnahme festgestellt werden kann, ob sich die Entnahmeöffnung der Pipettiernadel nicht mehr innerhalb der Flüssigkeit befindet und dadurch Luft angesaugt wird. Weiterhin können auch Luftblasen und größere Schaumblasen auf der Oberfläche der Flüssigkeit dadurch festgestellt werden.

Wird die Kapazität zwischen der Elektrode an der Pipettiernadel und der Gegenelektrode beim Eintauchen der Pipettiernadel in eine Flüssigkeit oder beim Austreten aus einer Flüssigkeit gemessen, so tritt in beiden Fällen ein Kapazitätssprung auf. Der Kapazitätsverlauf unterliegt dabei einer Hysterese, d.h. die Kurven der Kapazitätsverläufe beim Eintauchen der Pipettiernadel in die Flüssigkeit und beim Austreten aus der Flüssigkeit sind nicht deckungsgleich, sondern gegeneinander versetzt. Der Kapazitätssprung beim Wechsel von einem Medium in ein anderes, d. h. von Flüssigkeit in Luft und umgekehrt, erfolgt jeweils mit einer gewissen Verzögerung gegenüber der tatsächlichen Position der Pipettiernadel. Die Größe der Hysterese hängt unter anderem auch von der Gefäßgeometrie und der Art der Flüssigkeit ab. Bei der Bestimmung der Sollwerte der Kapazitäten ist die Hysterese der Kapazitätsverläufe zu berücksichtigen.

Für die Berechnung der Sollwerte der Kapazitäten, bei denen auch eine Flüssigkeitsentnahme oder -abgabe berücksichtigt wird, müssen also zunächst die Kapazitäten (K₀) ohne Flüssigkeitsentnahme oder -abgabe bestimmt werden. Die Bestimmung der Kapazitäten (K₀) ohne Flüssigkeitsentnahme oder -abgabe kann individuell für jede einzelne Probe erfolgen oder aber aus Vergleichsdaten erhalten werden.

In einer bevorzugten Ausführungsform der Erfindung werden daher die Kapazitäten (K₀) in Abhängigkeit von der Position der Pipettiernadel einmal erfaßt und gespeichert und die Sollwerte (K_{Soll}) unter Berücksichtigung der Höhe der Flüssigkeitsoberfläche der in dem Gefäß enthaltenden Flüssigkeit und der Änderung der Höhe der Flüssigkeitsoberfläche berechnet.

Die Erfindung umfaßt weiterhin eine Pipettiervorrichtung mit einer Einrichtung zum Feststellen einer Verstopfung an der Aufnahmeöffnung einer Pipettiernadel bei der Entnahme von Flüssigkeit aus einem Flüssigkeit enthaltenden Gefäß und/oder bei der Abgabe von Flüssigkeit in ein Flüssigkeit enthaltendes Gefäß, wobei die Pipettiervorrichtung folgendes umfaßt:
- eine Pipettiernadel, die an oder in der Nähe der Aufnahmeöffnung eine Elektrode (E1) aufweist oder selbst als Elektrode (E1) ausgebildet ist,
- Mittel zum vertikalen Verfahren der Pipettiernadel,
- Mittel zum Anlegen eines Unterdrucks in der Pipettiernadel zum Aufsaugen einer Flüssigkeitsmenge in die Pipettiernadel und eines Überdrucks zum Abgeben einer Flüssigkeitsmenge aus der Pipettiernadel,
- Mittel zum Erfassen der elektrischen Kapazität zwischen der Elektrode (E1) und einer Gegenelektrode (E2) in Abhängigkeit von der Verfahrposition der Pipettiernadel,
- Mittel zum Vergleichen der erfaßten Kapazitäten mit vorgegebenen Sollwerten für die jeweilige Position der Pipettiernadel,
- Mittel zum Ausgeben einer Information über das Vorliegen einer Verstopfung an der Aufnahmeöffnung der Pipettiernadel, wenn die Abweichung zwischen den erfaßten Kapazitäten und den vorgegebenen Sollwerten an einer Position oder mehreren Positionen der Pipettiernadel einen vorgegebenen Schwellenwert übersteigt.

Des weiteren umfaßt die Erfindung ein Analysegerät, welches wenigstens eine Pipettiervorrichtung der vorgenannten Art umfaßt.

Eine solche Pipettiervorrichtung bzw. ein solches Analysegerät ist insbesondere für chemische und klinische Analysen mit den oben genannten Flüssigkeiten geeignet. Dabei ist es von besonderer Bedeutung, daß die Proben nicht durch größere Klumpen oder Koagel verunreinigt sind, die mit Hilfe dieser Pipettiervorrichtung erfaßt werden können. Mit der erfindungsgemäßen Pipettiervorrichtung können insbesondere Verstopfungen der Pipettiernadel bei sehr kleinen Probenvolumen von etwa 1 bis 2 µl festgestellt werden. Gängige Verfahren, bei denen eine Verstopfung durch Druckmessung festgestellt wird, sind nicht in der Lage, Verstopfungen bei derart kleinen Probenvolumina festzustellen.

Bevorzugt ist die Pipettiernadel gegen Störkapazitäten abgeschirmt. Durch Kapazitäten, die von umstehenden Geräten oder durch Bauteile innerhalb des Analysegeräts selbst verursacht werden, kann es zu Störungen bei der Kapazitätsmessung zwischen der Elektrode an der Pipettiernadel und der Gegenelektrode kommen. Daher ist es sinnvoll, die Pipettiernadel gegen solche Störkapazitäten abzuschirmen. Zur Abschirmung kann beispielsweise eine Koaxialanordnung verwendet werden.

Weitere Vorteile, Merkmale und Ausführungsformen der Erfindung werden anhand der folgenden Beschreibung und der dazugehörigen Figuren deutlich.
- Figur 1: zeigt eine schematische Darstellung einer Pipettiernadel nach dem Ausfahren aus einem Flüssigkeit enthaltenden Gefäß,
- Figur 2: zeigt eine schematische Darstellung einer Pipettiernadel nach dem Ausfahren aus einem Flüssigkeit enthaltenden Gefäß, wobei sich an der Entnahmeöffnung der Pipettiernadel ein Pfropfen befindet, und
- Figur 3: zeigt ein Diagramm der Kapazitätsverläufe.

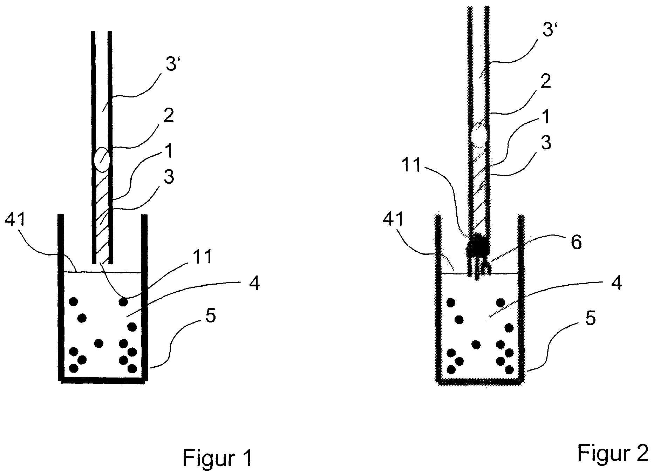

In Figur 1 ist eine Pipettiernadel 1 gezeigt, die eine Trennluftblase 2 enthält, die die aufgesogene Flüssigkeit 3 von Systemflüssigkeit 3' in der Nadel trennt. Die Nadel 1 wurde aus dem Gefäß 5, welches die Flüssigkeit 4 enthält, herausgefahren. Zwischen der Aufnahmeöffnung 11 der Pipettiernadel 1 und der Flüssigkeitsoberfläche 41 befindet sich Luft.

In Figur 2 ist eine Pipettiernadel 1 mit einer aufgesogenen Flüssigkeit 3 dargestellt, die aus einem Flüssigkeit 4 enthaltenden Gefäß 5 herausgefahren wurde. Dabei befindet sich zwischen der Aufnahmeöffnung 11 der Pipettiernadel 1 und der Flüssigkeitsoberfläche 41 ein Pfropfen 6, der eine elektrisch leitende Verbindung zwischen den Flüssigkeiten 3 und 4 herstellt. Die bei dieser Position der Pipettiernadel gemessene Kapazität (K_{Messung}) zwischen Elektrode und Gegenelektrode unterscheidet sich somit von derjenigen, die man im Idealfall ohne den Pfropfen erhalten oder erwarten würde, d. h. wenn sich zwischen der Pipettiernadel 1 und der Flüssigkeitsoberfläche 41 nur Luft befände (K_{Soll}), wie in Figur 1 dargestellt. Der steile Kapazitätssprung findet somit erst dann statt, wenn die Aufnahmeöffnung 11 der Pipettiernadel 1 noch weiter von der Flüssigkeitsoberfläche 41 entfernt ist und der Pfropfen 6 die Flüssigkeit 4 bzw. die Flüssigkeitsoberfläche 41 nicht mehr berührt.

Durch das erfindungsgemäße Verfahren wird der in Figur 2 vorhandene Pfropfen erkannt und ein entsprechendes Signal ausgegeben. Die Pipettiernadel kann daraufhin voll- oder halbautomatisch durchgespült und die betreffende Probe verworfen beziehungsweise nochmals pipettiert werden.

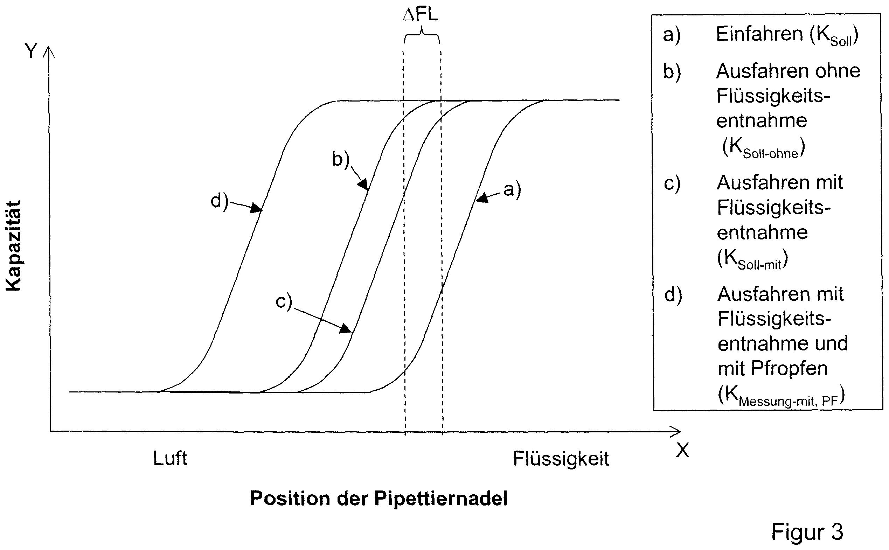

Figur 3 zeigt schematisch die erfaßten Kapazitäten zwischen einer Elektrode an der Pipettiernadel und einer Gegenelektrode beim Einfahren der Pipettiernadel in eine Flüssigkeit (Kurve a; K_{Soll}), beim Ausfahren aus der Flüssigkeit ohne Flüssigkeitsentnahme (Kurve b; K_{Soll-ohne}), beim Ausfahren aus der Flüssigkeit mit Flüssigkeitsentnahme ohne Pfropfen (Kurve c; K_{Soll-mit}) und beim Ausfahren aus der Flüssigkeit mit Flüssigkeitsentnahme und mit Pfropfen (Kurve d; K_{Mes-sung-mit, PF}).

Die X-Achse bezeichnet die vertikale Position der Aufnahmeöffnung der Pipettiernadel relativ zu dem Flüssigkeit enthaltenden Gefäß (ohne Einheiten). Auf der Y-Achse ist die gemessene Kapazität aufgetragen (ohne Einheiten).

Deutlich zu erkennen sind die steilen Kapazitätssprünge sowie die Hysterese zwischen den Kapazitätsverläufen beim Einfahren der Pipettiernadel in die Flüssigkeit und beim Ausfahren der Pipettiernadel aus der Flüssigkeit ohne Flüssigkeitsentnahme (Kurven a und b). Die gemessenen Kapazitäten der Kurven a und b entsprechen den Sollwerten der Kapazitäten in einem System mit einer gegebenen Gefäßgeometrie, einer bestimmten Flüssigkeit und einer bestimmten Flüssigkeitsmenge, jedoch noch ohne Berücksichtigung einer Flüssigkeitsentnahme.

Für eine tatsächliche Flüssigkeitsentnahme sind die hier gemessenen Werte noch um die Veränderung der Höhe der Flüssigkeitsoberfläche bei Entnahme oder Zugabe von Flüssigkeit zu korrigieren. Die Veränderung der Höhe der Flüssigkeitsoberfläche ist in Figur 3 mit ΔFL bezeichnet. Bei einer Entnahme von Flüssigkeit verschiebt sich die Kurve b der ohne Flüssigkeitsentnahme gemessenen Kapazitäten nach rechts, d. h. der steile Kapazitätsabfall erfolgt beim Ausfahren der Pipettiernadel früher als ohne Flüssigkeitsentnahme. Die Verschiebung der Kurve in Bezug auf die X-Achse entspricht der Veränderung der Höhe des Flüssigkeitsspiegels, welche sich anhand der Gefäßgeometrie und des entnommenen Volumens leicht berechnen läßt. Kurve c in Figur 3 zeigt den für die Flüssigkeitsentnahme korrigierten Verlauf der Kapazitäten beim Herausfahren der Pipetiernadel.

Setzt sich bei der Entnahme von Flüssigkeit an der Aufnahmeöffnung der Pipettiernadel ein Pfropfen oder Koagel fest, so erfolgt beim Ausfahren der Pipettiernadel aus der Flüssigkeit der steile Kapazitätsabfall erst deutlich später als ohne Pfropfen oder Koagel (Kurve c) und die Kurve des Verlaufs der tatsächlich gemessenen Kapazitäten verschiebt sich nach links (Kurve d; K_{Messung- mit, PF}). Übersteigt der Abstand der erfaßten Kapazitäten (K_{Messung}) von den Sollwerten einen vorgegebenen Schwellenwert, so wird dies als Information über das Vorhandensein eines Koagels oder Pfropfens ausgegeben. Hierfür reicht es, einzelne oder mehrere Kapazitätswerte in den Kurvenbereichen der steilen Kapazitätsänderungen zu vergleichen.

## Patentansprüche

1. Verfahren zum Feststellen einer Verstopfung (6) an der Aufnahmeöffnung (11) einer Pipettiernadel (1), die an oder in der Nähe der Aufnahmeöffnung (11) eine Elektrode (E1) aufweist oder selbst als Elektrode (E1) ausgebildet ist, in einem Analysegerät bei der Entnahme von Flüssigkeit (3) aus einem Flüssigkeit (4) enthaltenden Gefäß (5) und/oder bei der Abgabe von Flüssigkeit (3) in ein Flüssigkeit (4) enthaltendes Gefäß (5), bei dem
- die Pipettiernadel (1) verfahren wird, so dass die Aufnahmeöffnung (11) in die Flüssigkeit (4) in dem Flüssigkeit enthaltenden Gefäß (5) eintaucht,
- eine Flüssigkeitsmenge (3) in die Pipettiernadel aufgesaugt oder aus der Pipettiernadel (1) abgegeben wird,
- die Pipettiernadel (1) weiter verfahren wird, so dass die Aufnahmeöffnung (11) aus der Flüssigkeit (4) in dem Flüssigkeit enthaltenden Gefäß (5) herausfährt,
- während des Verfahrens der Pipettiernadel (1) die Kapazitäten (K_{Messung}) zwischen der Elektrode (E1) und einer Gegenelektrode (E2) in Abhängigkeit von der Position der Pipettiernadel (1) erfasst werden,
- die erfassten Kapazitäten (K_{Messung}) mit vorgegebenen Sollwerten (K_{Soll}) für die jeweilige Position der Pipettiernadel (1) verglichen werden und
- eine Information über das Vorliegen einer Verstopfung (6) an der Aufnahmeöffnung (11) der Pipettiernadel (1) ausgegeben wird, wenn die Abweichung zwischen den erfassten Kapazitäten (K_{Messung}) und den vorgegebenen Sollwerten (K_{Soll}) an einer Position oder mehreren Positionen der Pipettiernadel (1) einen vorgegebenen Schwellenwert übersteigt,
wobei die Sollwerte (K_{Soll}) der Kapazität in Abhängigkeit von der Position der Pipettiernadel bestimmt werden, indem
- die Pipettiernadel (1) verfahren wird, so dass die Aufnahmeöffnung (11) in die Flüssigkeit (4) in dem Flüssigkeit enthaltenden Gefäß (5) eintaucht,
- die Pipettiernadel (1) weiter verfahren wird, so dass die Aufnahmeöffnung (11) aus der Flüssigkeit (4) in dem Flüssigkeit enthaltenden Gefäß (5) herausfährt, ohne dass eine Flüssigkeitsmenge in die Pipettiernadel (1) aufgesaugt wird,
- während des Verfahrens der Pipettiernadel (1) die Kapazitäten (K0) zwischen der Elektrode (E1) und einer Gegenelektrode (E2) in Abhängigkeit von der Position der Pipettiernadel (1) erfasst werden,
- die erfassten Kapazitäten (K0) in Abhängigkeit von der Position der Pipettiernadel (1) bezüglich der sich in Abhängigkeit von dem bei der Flüssigkeitsentnahme zu entnehmenden Flüssigkeitsvolumen und den Gefäßabmessungen ergebenden Änderung der Höhe der Flüssigkeitsoberfläche in dem Gefäß (5) unter Erhalt der Sollwerte (K_{Soll}) korrigiert werden.

2. Verfahren nach Anspruch 1, **dadurch gekennzeichnet, dass** die Kapazitäten (K_{Messung}) über den gesamten Verfahrweg der Pipettiernadel (1) erfasst werden.

3. Verfahren nach Anspruch 1, **dadurch gekennzeichnet, dass** die Kapazitäten (K_{Messung}) auf Teilabschnitten des Verfahrweges der Pipettiernadel (1) erfasst werden, wobei die Teilabschnitte wenigstens die Wegstrecke der Aufnahmeöffnung (11) der Pipettiernadel (1) beim Herausfahren der Aufnahmeöffnung (11) aus der Flüssigkeit (4) in den Raum außerhalb der Flüssigkeit umfassen.

4. Verfahren nach einem der vorangehenden Ansprüche, **dadurch gekennzeichnet, dass** die Kapazitäten (K0) in Abhängigkeit von der Position der Pipettiernadel (1) einmal erfasst und gespeichert werden und die Sollwerte (K_{Soll}) unter Berücksichtigung der Höhe der Flüssigkeitsoberfläche der in dem Gefäß (5) enthaltenden Flüssigkeit und der Änderung der Höhe der Flüssigkeitsoberfläche berechnet werden.

5. Verwendung einer Pipettiervorrichtung mit einer Einrichtung zum Feststellen einer Verstopfung (6) an der Aufnahmeöffnung (11) einer Pipettiernadel (1) bei der Entnahme von Flüssigkeit (3) aus einem Flüssigkeit (4) enthaltenden Gefäß (5) und/oder bei der Abgabe von Flüssigkeit (3) in ein Flüssigkeit (4) enthaltendes Gefäß (5), in einem Verfahren gemäß einem der Ansprüche 1 bis 4, wobei die Pipettiervorrichtung folgendes umfasst:
- eine Pipettiernadel (1), die an oder in der Nähe der Aufnahmeöffnung (11) eine Elektrode (E1) aufweist oder selbst als Elektrode (E1) ausgebildet ist,
- Mittel zum vertikalen Verfahren der Pipettiernadel (1),
- Mittel zum Anlegen eines Unterdrucks in der Pipettiernadel (1) zum Aufsaugen einer Flüssigkeitsmenge in die Pipettiernadel (1) und eines Überdrucks zum Abgeben einer Flüssigkeitsmenge aus der Pipettiernadel (1),
- Mittel zum Erfassen der elektrischen Kapazität zwischen der Elektrode (E1) und einer Gegenelektrode (E2) in Abhängigkeit von der Verfahrposition der Pipettiernadel (1),
- Mittel zum Vergleichen der erfassten Kapazitäten mit vorgegebenen Sollwerten für die jeweilige Position der Pipettiernadel (1),
- Mittel zum Ausgeben einer Information über das Vorliegen einer Verstopfung (6) an der Aufnahmeöffnung (11) der Pipettiernadel (1), wenn die Abweichung zwischen den erfassten Kapazitäten und den vorgegebenen Sollwerten an einer Position oder mehreren Positionen der Pipettiernadel (1) einen vorgegebenen Schwellenwert übersteigt.

6. Verwendung eines Analysegerätes in einem Verfahren gemäß einem der Ansprüche 1 bis 4, **dadurch gekennzeichnet, dass** sie wenigstens eine Pipettiervorrichtung umfasst, wobei die Pipettiervorrichtung folgendes umfasst:
- eine Pipettiernadel (1), die an oder in der Nähe der Aufnahmeöffnung (11) eine Elektrode (E1) aufweist oder selbst als Elektrode (E1) ausgebildet ist,
- Mittel zum vertikalen Verfahren der Pipettiernadel (1),
- Mittel zum Anlegen eines Unterdrucks in der Pipettiernadel (1) zum Aufsaugen einer Flüssigkeitsmenge in die Pipettiernadel (1) und eines Überdrucks zum Abgeben einer Flüssigkeitsmenge aus der Pipettiernadel (1),
- Mittel zum Erfassen der elektrischen Kapazität zwischen der Elektrode (E1) und einer Gegenelektrode (E2) in Abhängigkeit von der Verfahrposition der Pipettiernadel (1),
- Mittel zum Vergleichen der erfassten Kapazitäten mit vorgegebenen Sollwerten für die jeweilige Position der Pipettiernadel (1),
- Mittel zum Ausgeben einer Information über das Vorliegen einer Verstopfung (6) an der Aufnahmeöffnung (11) der Pipettiernadel (1), wenn die Abweichung zwischen den erfassten Kapazitäten und den vorgegebenen Sollwerten an einer Position oder mehreren Positionen der Pipettiernadel (1) einen vorgegebenen Schwellenwert übersteigt.

## Claims

1. A method of identifying a blockage (6) at a receiving opening (11) of a pipetting needle (1) in an analysis apparatus when taking liquid (3) from a liquid-containing (4) vessel (5) and/or when delivering liquid (3) into a liquid-containing (4) vessel (5), said pipetting needle at or close to the receiving opening (11) having an electrode (E1) or being itself an electrode (E1), comprising:
- said pipetting needle (1) being displaced such that the receiving opening (11) is immersed in said liquid (4) in said liquid-containing vessel (5),
- an amount of liquid (3) being sucked up into said pipetting needle or delivered from said pipetting needle (1),
- further displacing said pipetting needle (1) such that the receiving opening (11) comes out of the liquid (4) in the liquid-containing vessel (5),
- detecting during said displacement of the pipetting needle (1) the capacitances (Kₘₑₐₛ₋ᵤᵣₑₘₑₙₜ) between the electrode (E1) and a counter-electrode (E2) in dependence on the position of said pipetting needle (1),
- comparing said detected capacitances (Kₘₑₐₛᵤᵣₑₘₑₙₜ) to predetermined reference values (K_{reference}) for the respective position of said pipetting needle (1), and
- delivering information about the presence of a blockage (6) at the receiving opening (11) of the pipetting needle (1) if a deviation between the detected capacitances (Kₘₑₐₛ₋ᵤᵣₑₘₑₙₜ) and the predetermined reference values (K_{reference}) at one position or a plurality of positions of the pipetting needle (1) exceeds a predetermined threshold value,
where by said reference values (K_{reference}) of the capacitance in dependence on the position of said pipetting needle are determined by a procedure, comprising
- the pipetting needle (1) being displaced such that said receiving opening (11) is immersed in said liquid (4) in said liquid-containing vessel (5),
- further displacing said pipetting needle (1) such that said receiving opening (11) is moved out of said liquid (4) in said liquid-containing vessel (5) without an amount of liquid being sucked up into said pipetting needle (1),
- detecting during said displacement of said pipetting needle (1) capacitances (K0) between the electrode (E1) and a counter-electrode (E2) in dependence on the position of the pipetting needle (1),
- correcting said detected capacitances (K0) in dependence on the position of the pipetting needle (1) in relation to the change in the height of the surface of the liquid in the vessel (5), which change occurs in dependence on the liquid volume to be removed in the liquid removal operation, and the vessel dimensions, thereby obtaining said reference values (K_{reference}).

2. A method according to claim 1 **characterised in that** said capacitances (Kₘₑₐₛᵤᵣₑₘₑₙₜ) are detected over the entire displacement travel of the pipetting needle (1).

3. A method according to claim 1 **characterised in that** said capacitances (Kₘₑₐₛᵤᵣₑₘₑₙₜ) are detected over portions of the displacement travel of said pipetting needle (1), wherein the portions include at least the travel distance of said receiving opening (11) of said pipetting needle (1) when said receiving opening (11) is moved out of said liquid (4) into the space outside said liquid.

4. A method according to one of the preceding claims **characterised in that** said capacitances (K0) in dependence on the position of the pipetting needle (1) are once detected and stored and said reference values (K_{reference}) are calculated having regard to the height of the surface of the liquid contained in the vessel (5) and the change in the height of the surface of the liquid.

5. Use of a pipetting apparatus having a device for identifying a blockage (6) at the receiving opening (11) of a pipetting needle (1) when taking liquid (3) from a liquid-containing (4) vessel (5) and/or when delivering liquid (3) into a liquid-containing (4) vessel (5) in a method according to one of claims 1 to 4, wherein the pipetting apparatus includes the following:
- a pipetting needle (1) which at or in the proximity of the receiving opening (11) has an electrode (E1) or is itself in the form of an electrode (E1),
- means for vertical displacement of the pipetting needle (1),
- means for applying a reduced pressure in the pipetting needle (1) for sucking up an amount of liquid into the pipetting needle (1) and an increased pressure for delivery of an amount of liquid from the pipetting needle (1),
- means for detecting the electrical capacitance between the electrode (E1) and a counter-electrode (E2) in dependence on the displacement position of the pipetting needle (1),
- means for comparing the detected capacitances to predetermined reference values for the respective position of the pipetting needle (1),
- means for delivering an item of information about the presence of a blockage (6) at the receiving opening (11) of the pipetting needle (1) if the deviation between the detected capacitances and the predetermined reference values at a position or a plurality of positions of the pipetting needle (1) exceeds a predetermined threshold value.

6. Use of an analysis apparatus in a method according to one of claims 1 to 4 **characterised in that** it includes at least one pipetting apparatus, wherein the pipetting apparatus includes the following:
- a pipetting needle (1) which at or in the proximity of the receiving opening (11) has an electrode (E1) or is itself in the form of an electrode (E1),
- means for vertical displacement of the pipetting needle (1),
- means for applying a reduced pressure in the pipetting needle (1) for sucking up an amount of liquid into the pipetting needle (1) and an increased pressure for delivery of an amount of liquid from the pipetting needle (1),
- means for detecting the electrical capacitance between the electrode (E1) and a counter-electrode (E2) in dependence on the displacement position of the pipetting needle (1),
- means for comparing the detected capacitances to predetermined reference values for the respective position of the pipetting needle (1),
- means for delivering an item of information about the presence of a blockage (6) at the receiving opening (11) of the pipetting needle (1) if the deviation between the detected capacitances and the predetermined reference values at a position or a plurality of positions of the pipetting needle (1) exceeds a predetermined threshold value.

## Revendications

1. Procédé pour constater un bouchon (6) au niveau de l'ouverture de réception (11) d'une aiguille de pipetage (1), qui présente une électrode (E1) au niveau de ou à proximité de l'ouverture de réception (11) ou est elle-même conçue en tant qu'électrode (E1), dans un appareil d'analyse lors du prélèvement de fluide (3) depuis un récipient (5) contenant du fluide (4) et/ou lors de la décharge de fluide (3) dans un récipient (5) contenant du fluide (4), dans lequel
- l'aiguille de pipetage (1) est déplacée de façon telle que l'ouverture de réception (11) plonge dans le fluide (4) du récipient contenant le fluide (5),
- une quantité de fluide (3) est aspirée dans l'aiguille de pipetage ou est déchargée depuis l'aiguille de pipetage (1),
- l'aiguille de pipetage (1) est encore déplacée, de façon telle que l'ouverture de réception (11) ressorte du fluide (4) du récipient contenant le fluide (5),
- pendant le déplacement de l'aiguille de pipetage (1), les capacités (K_{messung}) entre l'électrode (E1) et une contre-électrode (E2) sont enregistrées en fonction de la position de l'aiguille de pipetage (1),
- les capacités enregistrées (K_{messung}) sont comparées à des valeurs de consigne (Lₛₒₗₗ) prédéterminées pour chaque position respective de l'aiguille de pipetage (1),
- une information sur la présence d'un bouchon (6) au niveau de l'ouverture de réception (11) de l'aiguille de pipetage (1) est émise lorsque l'écart entre les capacités enregistrées (K_{messung}) et les valeurs de consigne prédéfinies (Kₛₒₗₗ) dépasse une valeur de seuil prédéfinie au niveau d'une position ou de plusieurs positions de l'aiguille de pipetage (1),
où les valeurs de consigne (Kₛₒₗₗ) de la capacité sont déterminées en fonction de la position de l'aiguille de pipetage en ce que
- l'aiguille de pipetage (1) est encore déplacée de façon à ce que l'ouverture de réception (11) plonge dans le fluide (4) du récipient contenant le fluide (5),
- l'aiguille de pipetage (1) est encore déplacée, de sorte que l'ouverture de réception (11) ressorte du fluide (4) du récipient contenant le fluide (5) sans qu'une quantité de fluide ne soit aspirée dans l'aiguille de pipetage (1),
- pendant le déplacement de l'aiguille de pipetage (1), les capacités (K0) entre l'électrode (E1) et une contre-électrode (E2) sont enregistrées en fonction de la position de l'aiguille de pipetage (1),
- les capacités enregistrées (K0) sont corrigées en fonction de la position de l'aiguille de pipetage (1) par rapport à la modification de la hauteur de la surface du liquide dans le récipient (5), qui découle du volume de fluide à prélever lors du prélèvement de liquide et des mesures du récipient, en maintenant les valeurs de consigne (Kₛₒₗₗ).

2. Procédé selon la revendication 1, **caractérisé en ce que** les capacités (K_{messung}) sont enregistrées sur toute la trajectoire de déplacement de l'aiguille de pipetage (1).

3. Procédé selon la revendication 1, **caractérisé en ce que** les capacités (K_{messung}) sont enregistrées sur des segments partiels de la trajectoire de déplacement de l'aiguille de pipetage (1), où les segments partiels comportent au moins la trajectoire de l'ouverture de réception (11) de l'aiguille de pipetage (1) lors du retrait de l'ouverture de réception (11) du fluide (4) dans l'espace hors du fluide.

4. Procédé selon l'une des revendications précédentes, **caractérisé en ce que** les capacités (K0) sont une fois enregistrées en fonction de la position de l'aiguille de pipetage (1) et mémorisées, et les valeurs de consigne (Kₛₒₗₗ) sont calculées en tenant compte de la hauteur de la surface de fluide du fluide contenu dans le récipient (5) et de la modification de la hauteur de la surface de fluide.

5. Utilisation d'un dispositif de pipetage comportant un dispositif permettant de déterminer un bouchon (6) au niveau de l'ouverture de réception (11) d'une aiguille de pipetage (1) lors du prélèvement de fluide (3) hors d'un récipient (5) contenant du fluide (4) et/ou lors de la décharge de fluide (3) dans un récipient (5) contenant du fluide (4) dans un procédé selon l'une des revendications 1 à 4, où le dispositif de pipetage comporte ce qui suit :
- une aiguille de pipetage (1) qui présente au niveau de ou à proximité de l'ouverture de réception (11) une électrode (E1), ou est elle-même conçue en tant qu'électrode (E1),
- des moyens permettant le déplacement vertical de l'aiguille de pipetage (1),
- des moyens permettant d'appliquer une dépression dans l'aiguille de pipetage (1) afin d'aspirer une quantité de fluide dans l'aiguille de pipetage (1) et une surpression afin de décharger une quantité de fluide depuis l'aiguille de pipetage (1),
- des moyens permettant d'enregistrer la capacité électrique entre l'électrode (E1) et une contre-électrode (E2) en fonction de la position de déplacement de l'aiguille de pipetage (1),
- des moyens permettant de comparer les capacités enregistrées à des valeurs de consigne prédéfinies pour chaque position respective de l'aiguille de pipetage (1),
- des moyens permettant d'émettre une information sur la présence d'un bouchon (6) au niveau d'une ouverture de réception (11) de l'aiguille de pipetage (1) lorsque l'écart entre les capacités enregistrées et les valeurs de consigne prédéfinies dépasse une valeur de seuil prédéfinie au niveau d'une position ou de plusieurs positions de l'aiguille de pipetage (1).

6. Utilisation d'un appareil d'analyse dans un procédé selon l'une des revendications 1 à 4, **caractérisée en ce qu'**elle comprend au moins un dispositif de pipetage, le dispositif de pipetage comprenant ce qui suit :
- une aiguille de pipetage (1) qui présente au niveau de ou à proximité de l'ouverture de réception (11) une électrode (E1) ou est elle-même conçue en tant qu'électrode (E1),
- des moyens permettant le déplacement vertical de l'aiguille de pipetage (1),
- des moyens permettant d'appliquer une dépression dans l'aiguille de pipetage (1) afin d'aspirer une quantité de fluide dans l'aiguille de pipetage (1) et une surpression afin de décharger une quantité de fluide depuis l'aiguille de pipetage (1),
- des moyens permettant d'enregistrer la capacité électrique entre l'électrode (E1) et une contre-électrode (E2) en fonction de la position de déplacement de l'aiguille de pipetage (1),
- des moyens permettant de comparer les capacités enregistrées à des valeurs de consigne prédéfinies pour chaque position respective de l'aiguille de pipetage (1),
- des moyens permettant d'émettre une information sur la présence d'un bouchon (6) au niveau de l'ouverture de réception (11) de l'aiguille de pipetage (1) lorsque l'écart entre les capacités enregistrées et les valeurs de consigne prédéfinies dépasse une valeur de seuil prédéfinie au niveau d'une position ou de plusieurs positions de l'aiguille de pipetage (1).
